# FASCICULE DE BREVET EUROPEEN

(11) **EP 1 751 549 B1**
(45) Date de publication et mention de la délivrance du brevet: **21.11.2007**
(21) Numéro de dépôt: 04734303.3
(22) Date de dépôt: 21.05.2004
(51) Int. Cl.: G01N 33/52, C12Q 1/40

(54) **INDICATEUR ORTHODONTIQUE**
ORTHODONTISCHER INDIKATOR
ORTHODONTIC INDICATOR

(43) Date de publication de la demande: 14.02.2007
(73) Titulaire: Kafaï El-Khorassani, Hossein, 5465 Waldbredimus (LU)
(72) Inventeur: Kafaï El-Khorassani, Hossein, 5465 Waldbredimus (LU)
(74) Mandataire: Ocvirk, Philippe
(86) Numéro de dépôt international: PCT/IB2004/001653
(87) Numéro de publication internationale: WO 2005/114183

(56) Documents cités:
- US-A- 4 729 948
- SAVAGE M: "A PRELIMINARY REPORT INTO THE DEVELOPMENT AND USE OF SOLUBLE CONTROLLED-RELEASE GLASS TIMING DISCS IMPLANTED INTO ORTHODONTIC APPLIANCES" BRITISH JOURNAL OF ORTHODONTICS, CHURCHILL LIVINGSTONE, EDINBURGH, GB, vol. 9, 1982, pages 190-193, XP000650241 ISSN: 0301-228X

## Description

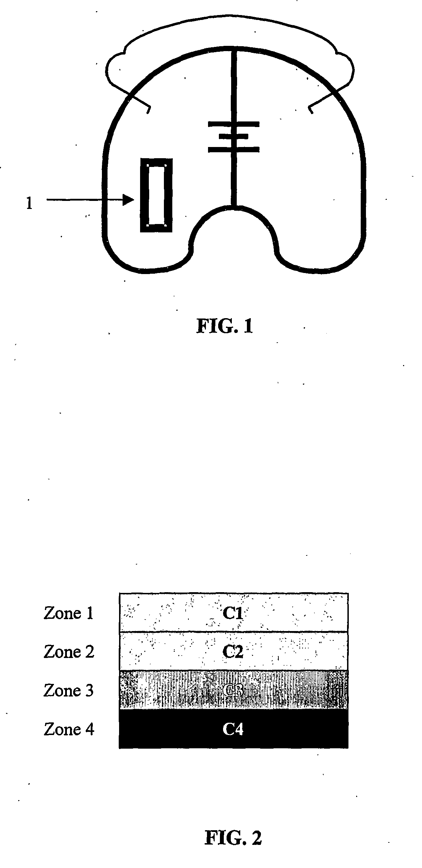

La présente invention concerne un nouveau moyen fiable pour mesurer la durée totale du port d'un appareil orthodontique amovible (unimaxillaire ou fonctionnel) - ci-après dénommé 'appareil amovible' (***Fig. 1***) - porté par un patient pour un intervalle de temps bien précis. Ce dispositif est destiné à explorer par le médecin traitant la régularité du port de l'appareil amovible.

A l'heure-actuelle; deux autres méthodes sont-connues pour mesurer la durée totale du port d'un appareil orthodontique amovible. Néanmoins, leur degré de fiabilité est limité :
■ Dans un cas, il s'agit d'insérer un chronomètre dans un appareil orthodontique amovible. Ce chronomètre se met en marche au contact avec l'humidité salivaire. Ce moyen n'est pas fiable puisque le chronomètre de l'appareil peut se mettre aussi en marche en présence d'humidité extérieure à la cavité buccale. Par conséquent, il est impossible de connaître avec certitude la durée effective du port de l'appareil amovible par le patient.
■ Dans un deuxième cas, il s'agit d'insérer dans un appareil orthodontique amovible un chronomètre qui se met en marche en présence d'un champ magnétique émis par un aimant préalablement fixé sur une des surfaces dentaires du patient. Comme dans le premier cas, il est possible de déclencher le chronomètre en dehors de la cavité buccale, dès que l'appareil amovible se trouve en présence d'une source de champs magnétique autre que l'aimant fixé sur la surface dentaire du patient. Par conséquent, dans ce cas il n'est pas non plus possible de connaître avec certitude la durée réelle du port de l'appareil amovible.

US 4729948 décrit un papier indicateur pour la mesure de l'activité de l'amylase, ledit papier indicateur étant composé d'une seule zone principale colorée initialement en teinture d'iode.

La nouvelle invention est basée sur l'utilisation d'un papier indicateur (***Fig. 2***) inséré par le médecin traitant dans l'appareil amovible et exposé au milieu salivaire. L'insertion de ce papier se fait dans une fenêtre ouverte (***Fig. 1, n° 1***) conçue spécialement par le prothésiste dentaire lors de la conception de l'appareil amovible. Sous l'effet du contact du papier indicateur avec la salive, le papier subira une décoloration graduelle en fonction de la durée de la présence de l'appareil dans la cavité buccale.

Pour concevoir le papier indicateur sensible à la salive, un papier riche en amidon sera choisi et sera coloré par teinture d'iode en violet sous l'effet de la présence de l'amidon. La décoloration du papier indicateur se fera lors de la réaction de la salive avec l'amidon présent dans le papier. Cette décoloration résulte d'une dégradation enzymatique sous l'action d'un enzyme salivaire, nommé « amylase », qui dégrade l'amidon présent dans le papier indicateur. Compte tenu de cette propriété chimique de la salive, le papier indicateur ne peut se décolorer que par la salive et restera inchangé (pas de décoloration) en contact avec tout autre flux liquide ou alimentaire. Par ailleurs, afin que la réaction chimique salivaire puisse se produire, le papier indicateur doit être perméable au flux salivaire.

Pour permettre une mesure de la durée totale du port de l'appareil amovible, le papier indicateur sera conçu préalablement sous forme de gradient d'intensité de couleur violet, visible en zones distinctes, contiguës et de même largeur (***Fig. 2***)*.* Le nombre de ces zones est en fonction de la durée voulue qui sépare les consultations de contrôle du patient. Par exemple, pour un traitement orthodontique amovible nécessitant un suivi du patient toutes les quatre semaines, le médecin traitant utilisera un papier indicateur composé de quatre zones (***Fig. 2***). Si, l'intervalle du suivi est fixé à toutes les six semaines, un papier indicateur à six zones sera utilisé à sa place.

Lors de chaque consultation de contrôle, le papier indicateur sera retiré par le médecin pour examen et mesure de la durée du port de l'appareil amovible. L'ancien papier indicateur sera remplacé par un nouveau papier.

### Description du fonctionnement de la décoloration du papier indicateur :

Le papier indicateur est composé de plusieurs zones principales de couleur violet qui sont colorées initialement en teinture d'iode de concentration différente et qui sont juxtaposées en gradient. Sous l'effet chimique de la salive sur le papier indicateur, il y aura une décoloration graduelle par zone. Selon le nombre de zones décolorées, on déduira la durée totale effective du port de l'appareil amovible dans la cavité buccale entre deux consultations de contrôle.

La description détaillée du fonctionnement de cette décoloration est présentée ci-après par un exemple de papier à quatre zones (***Fig. 2***).

Zone numéro 1 : cette zone correspond au port régulier (par exemple, 20 heures par jour) de l'appareil amovible pendant une semaine. Elle est colorée en teinture d'iode d'une concentration suffisante C₁ pour que la zone soit totalement décolorée au bout d'une semaine.

Zone numéro 2 : cette zone correspond au port régulier de l'appareil amovible pendant deux semaines. Elle est colorée en teinture d'iode d'une concentration suffisante C₂ pour que la zone soit totalement décolorée au bout de deux semaines.

Zone numéro 3 : cette zone correspond au port régulier de l'appareil amovible pendant trois semaines. Elle est colorée en teinture d'iode d'une concentration suffisante C₃ pour que la zone soit totalement décolorée au bout de trois semaines.

Zone numéro 4 : cette zone correspond au port régulier de l'appareil amovible pendant quatre semaines. Elle est colorée en teinture d'iode d'une concentration suffisante C₄ pour que la zone soit totalement décolorée au bout de quatre semaines.

Après une semaine de port régulier de l'appareil amovible, la première zone sera totalement décolorée. Pour les trois autres zones, chacune sera respectivement plus claire qu'auparavant.

Après la deuxième semaine, la zone numéro 2 sera aussi totalement décolorée, et les zones numéro 3 et 4 seront chacune respectivement encore plus claire. Ainsi de suite, à la fin de la quatrième semaine, si le port de l'appareil a toujours été régulier, aucune zone colorée ne doit plus subsister.

Par contre, si durant la période des quatre semaines, toutes les zones n'ont pas été décolorées, ceci signifie que l'appareil amovible n'avait pas été suffisamment porté comme prescrit par le médecin traitant. Par exemple, si au bout de quatre semaines, seules les zones numéro 1 et 2 ont été totalement décolorées, on peut en déduire que la durée effective du port de l'appareil était la moitié du temps prescrit.

Pour le besoin d'une mesure plus précise de la durée du port de l'appareil amovible, chaque zone principale peut être encore subdivisée préalablement à son tour et visualisée par l'intensité de couleur distincte qui reste toutefois inférieure à celle de la zone principale suivante.

## Revendications

1. Papier indicateur pour la mesure de la durée du port d'un appareil orthodontique amovible, ledit papier indicateur étant perméable au flux salivaire, chargé en amidon et initialement coloré par teinture d'iode de sorte à pouvoir être décoloré par dégradation enzymatique de l'amidon sous l'action de l'amylase, **caractérisé en ce que** ledit papier indicateur est composé de plusieurs zones principales colorées initialement en teinture d'iode de concentration différente et qui sont juxtaposées en gradient.

2. Papier indicateur selon la revendication 1, dans lequel les zones principales sont distinctes, contiguës et de même largeur.

3. Papier indicateur selon la revendication 1 ou 2, dans lequel le nombre de zones principales est choisi en fonction de la durée voulue qui sépare les consultations de contrôle.

4. Papier indicateur selon la revendication 1, 2 ou 3, comprenant 4 ou 6 zones principales.

5. Appareil orthodontique amovible comprenant une fenêtre ouverte recevant un papier indicateur selon l'une quelconque des revendications précédentes, ladite fenêtre ouverte permettant l'exposition dudit papier indicateur au flux salivaire.

6. Appareil orthodontique amovible selon la revendication 5, ledit appareil étant du type unimaxillaire ou fonctionnel.

7. Utilisation d'un papier indicateur selon l'une quelconque des revendications 1 à 4 pour la mesure de la durée totale du port d'un appareil orthodontique amovible porté par un patient pour un intervalle de temps précis.

## Claims

1. Indicator paper for measuring the wearing time of a removable orthodontic appliance, said indicator paper being permeable to the salivary flow, containing starch and initially coloured by iodine tincture so as to be able to be decoloured by enzymatic degradation of the starch under the action of amylase, **characterized in that** said indicator paper is composed of several main zones initially coloured by different concentrations of iodine tincture which are juxtaposed as a gradient series

2. Indicator paper according to Claim 1, in which the main zones are separate, contiguous and of the same width.

3. Indicator paper according to Claim 1 or 2, in which the number of main zones is chosen as a function of the desired time that separates the follow-up consultations

4. Indicator paper according to Claim 1, 2 or 3, comprising four or six main zones

5. Removable orthodontic appliance comprising an open window that receives an indicator paper according to any one of the preceding claims, said open window allowing exposure of said indicator paper to the salivary flow

6. Removable orthodontic appliance according to Claim 5, said appliance being of the single maxillary or functional type

7. Use of an indicator paper according to any one of Claims 1 to 4, for measuring the total wearing time of a removable orthodontic appliance worn by a patient for a specific time interval

## Patentansprüche

1. Indikatorpapier zum Messen der Tragedauer einer herausnehmbaren kieferorthopädischen Apparatur, wobei das Indikatorpapier für den Speichelfluss durchlässig, mit Stärke versehen und anfänglich mit lodtinktur derart gefärbt ist, dass es durch enzymatischen Abbau der Stärke unter der Wirkung der Amylase entfärbt werden kann, **dadurch gekennzeichnet, dass** das Indikatorpapier aus mehreren Hauptzonen besteht, die anfänglich mit lodtinktur in unterschiedlicher Konzentration gefärbt und abgestuft nebeneinander gelegt werden.

2. Indikatorpapier nach Anspruch 1, wobei die Hauptzonen getrennt, aneinandergrenzend und von gleicher Breite sind.

3. Indikatorpapier nach Anspruch 1 oder 2, wobei die Anzahl der Hauptzonen je nach der gewollten Dauer des Intervalls zwischen den Kontrollkonsultation gewählt sind

4. Indikatorpapier nach Anspruch 1, 2 oder 3, das 4 oder 6 Hauptzonen umfasst

5. Herausnehmbare kieferorthopädische Apparatur, die ein offenes Fenster umfasst, durch das ein Indikatorpapier nach irgendeinem der vorhergehenden Ansprüche eingeführt wird, wobei das offene Fenster es ermöglicht, dass das Indikatorpapier dem Speichelfluss ausgesetzt wird

6. Herausnehmbare kieferorthopädische Apparatur nach Anspruch 5, wobei die Apparatur vom unimaxillären oder funktionellen Typ ist

7. Verwendung eines Indikatorpapiers nach irgendeinem der Ansprüche 1 bis 4 zum Messen der Gesamttragedauer einer herausnehmbaren kieferorthopädischen, von einem Patienten während einer exakt festgelegten Zeitspanne getragenen Apparatur.
